Europäisches Patentamt

(19) European Patent Office

Office européen des brevets

(11) Numéro de publication: **0 230 404**
**B1**

(12) **FASCICULE DE BREVET EUROPEEN**

(45) Date de publication du fascicule du brevet:
04.07.90

(51) Int. Cl.⁵: **F17D 5/06, G01M 3/28**

(21) Numéro de dépôt: **87870005.3**

(22) Date de dépôt: **16.01.87**

(54) **Système de détection et de localisation de fuite dans une conduite de transport de fluide à double enveloppe.**

(30) Priorité: **16.01.86 FR 8600566**

(43) Date de publication de la demande:
**29.07.87 Bulletin 87/31**

(45) Mention de la délivrance du brevet:
**04.07.90 Bulletin 90/27**

(84) Etats contractants désignés:
**BE CH DE GB LI**

(56) Documents cités:
**EP-A- 0 053 546**
**CH-A- 468 590**
**GB-A- 1 366 307**

(73) Titulaire: **Storme, Charles-André, Rue du Sart, 9b,
B-1460 Ittre(BE)**

(72) Inventeur: **Storme, Charles-André, Rue du Sart, 9b,
B-1460 Ittre(BE)**

(74) Mandataire: **Plucker, Guy et al, OFFICE
KIRKPATRICK 4 Square de Meeûs,
B-1040 Bruxelles(BE)**

## Description

L'invention a pour objet un système permettant de détecter et de localiser les fuites susceptibles de se produire dans les conduites d'un réseau de transport de fluide à double enveloppe et plus particulièrement, par exemple, un réseau caloporteur ou de chauffage urbain.

Typiquement, une conduite de transport de fluide caloporteur est constituée de deux canalisations concentriques généralement enterrées. La canalisation intérieure est enveloppée dans une forte épaisseur d'isolant et sert au transport du fluide caloporteur proprement dit. Cette gaine, isolante, est elle-même entourée d'un espace annulaire rempli d'air sec ou sous vide. La canalisation extérieure (ou enveloppe) assure à la fois la protection mécanique, le maintien du vide ou de la couche d'air sec et alloue un certain jeu à la canalisation intérieure en fonction des contraintes thermiques que celle-ci est amenée à subir.

Certaines conduites comportent d'ailleurs, sous une même enveloppe protectrice extérieure, plusieurs tubes caloporteurs courant parallèlement.

L'invention s'applique de la même manière à des réseaux de transport de fluides dangereux.

Faute d'un moyen de repérage approprié, la localisation d'une fuite dans de tels réseaux, surtout lorsqu'ils sont enterrés, est malaisée et coûteuse car l'installation doit éventuellement être mise hors service. Il est souvent nécessaire de creuser de nombreuses excavations jusqu'à la conduite avant de pouvoir repérer le segment défectueux. Ces recherches sont encore rendues plus malaisées du fait qu'on se trouve en site urbain. Par ailleurs, l'espace compris entre le calorifugeage et l'enveloppe extérieure permet au fluide issu de la fuite (souvent de l'eau ou de la vapeur) de se répandre sans contrainte sur toute la longueur d'un tronçon de réseau.

Outre les pertes d'exploitation, ce phénomène peut endommager l'installation elle-même du fait de mouvements des conduites externes d'ampleur inusitée provoqués par la dilatation thermique et le détrempage de l'isolant.

Le système suivant l'invention entend limiter les pertes d'exploitation et les dégâts causés à l'installation par un repérage rapide et un diagnostic aisé de la nature des fuites dans les installations.

Le brevet CH- 468 590 décrit une installation de protection contre les fuites dans une conduite, essentiellement destinée ou transport d'hydrocarbures. La conduite de transport est entourée de réservous annulaires étanches, ces réservous étant remplis d'eau sous pression statique. Chacun de ces réservous est relié, à son point haut, à une cheminée dotée de dispositifs de détection sensibles au niveau de l'eau dans cette cheminée. Les dits dispositifs sont reliées à un tableau de refroge control, chaque cheminée étant, en outre, raccordée à un conduit d'évacuation de trop-plein.

Il existe un système de localisation de telles fuites consistant en un câble constitué de deux conducteurs électriques à isolation perforée dont on connaît la résistance unitaire, disposé au fond de l'enveloppe extérieure. En présence d'humidité dans cette dernière, il y a passage d'un signal électrique entre l'âme du conducteur et l'enveloppe extérieure; la mesure de ce signal permet de localiser la fuite en fonction de la résistance du circuit avec une approximation de quelques mètres.

Ce système donne lieu, en pratique, à de sérieux problèmes de mise en œuvre sur chantier; il est en effet malaisé de raccorder entre eux, lors de la pose des conduites, les éléments du câble détecteur; les oublis sont fréquents et il arrive souvent que le câble soit brûlé lors du soudage des manchettes de raccordement des conduites. Enfin, il arrive fréquemment que le câble soit crisaillé par les mouvements relatifs de la conduite extérieure et des supports du tube caloporteur dus à la dilatation thermique.

Pour les réseaux dans lesquels l'espace annulaire des conduites est mis sous vide, l'existence d'une fuite peut être décelée par le fait que le vide n'est plus maintenu. Une telle indication ne permet cependant pas la localisation précise de la fuite qui peut affecter un tronçon de plusieurs centaines de mètres, voire plusieurs kilomètres, voire plusieurs kilomètres de long.

Enfin, il existe une méthode, décrite notamment dans "La Technique de l'eau et de l'assainissement", n° 410, février 1981, pages 7 à 17 permettant la localisation des fuites par la mesure des vibrations transmises par les fluides remplissant la conduite ou la paroi de celle-ci. Cette méthode appelée "corrélation acoustique" permet un repérage extrêmement précis. Mais la corrélation acoustique n'est utilisable que sur une portée limitée et, de surcroît, impose de pouvoir accéder au fluide caloporteur, à la paroi ou à l'espace compris dans l'enveloppe extérieure. Cette méthode est avantageusement utilisée comme moyen de localisation fine dans le système suivant l'invention.

L'invention se rapporte à un système de détection et de localisation de fuite dans une conduite à double enveloppe constituée d'au moins un tube transporteur de fluide enfermé dans une enveloppe protectrice extérieure comprenant:

des dispositifs détecteurs, échelonnés le long des conduites, chacun de ces dispositifs détecteurs consistant en un tube qui, depuis un point d'accès, descend à côté de la conduite;

une sonde apte à émettre un signal électrique de défaut étant positionnée dans ces détecteurs par une canne portée par un couvercle fermant la partie supérieure du dit tube;

des moyens de transmission de signaux électriques ou électroniques reliant les sondes des dispositifs détecteurs à un tableau de contrôle;

chaque tube se termine à son extrémité inférieure par une cuvette située en contrebas de la dite conduite. Dans chaque cuvette est positionnée une sonde détectrice de phase liquide; chaque cuvette est mise en communication avec l'espace compris entre le tube transporteur de fluide et l'enveloppe protectrice extérieure par une tubulure qui, depuis la partie inférieure de cette enveloppe protectrice, descend vers la dite cuvette;

ce système comprend, en outre,

des dispositifs de branchement pour capteurs de vibrations échelonnés le long des conduites, ces dispositifs comportant une tubulure dont une des extrémités est branchée sur l'enveloppe protectrice extérieure de la conduite et dont l'autre extrémité, pourvue de moyens de fermeture, aboutit à un point d'accès et est terminée par une embase appropriée au montage de capteurs de vibrations:
- le tableau de contrôle comprenant des moyens de signalisation aptes à avertir le personnel de l'émission d'un signal de défaut, des moyens d'affichage aptes à désigner la sonde ayant réagi; des moyens de comptage horaire aptes à déterminer l'intervalle écoulé depuis l'émission d'un signal de défaut.

Suivant une forme d'exécution préférée, le système de détection et de localisation de fuite comporte, en outre pour chaque tube transporteur de fluide, une tubulure dont une des extrémités est branchée sur un tube transporteur de fluide et dont l'autre extrémité, pourvue de moyens de fermeture, aboutit au point d'accès et est terminée par une embase appropriée au montage de capteurs de vibrations.

Suivant une forme d'exécution particulière, chaque tubulure de branchement pour capteur acoustique ou autre, reliée à un tube de transport de fluide, est entourée d'une tubulure de branchement pour capteur de vibrations reliée à l'enveloppe protectrice extérieure.

Suivant certaines formes d'exécution, chaque tubulure de branchement pour capteur reliée au tube de transport de fluide est fermée par une vanne à passage intégral.

Suivant une forme de réalisation avantageuse, les dispositifs détecteurs et les dispositifs de branchement de capteurs sont montés, de préférence solidairement, sur des manchettes de raccordement des conduites.

Suivant une forme d'exécution particulière, chaque dispositif détecteur comporte un tube capillaire débouchant au droit de la sonde détectrice de phase liquide, apte à injecter un liquide sur la sonde lors d'opérations d'entretien pour simuler une fuite ou nettoyer la sonde sans démontage, chacun de ces dispositifs détecteurs est avantageusement doté d'un tube de prélèvement qui traverse le couvercle et débouche dans la cuvette collectrice.

Selon une exécution avantageuse, chaque dispositif détecteur comporte entre la tête de la sonde et la tubulure de raccordement avec l'enveloppe extérieure de la conduite, un moyen apte à obturer le tube du dispositif détecteur, de façon à permettre un démontage du couvercle du dispositif détecteur sans annuler la dépression régnant dans l'enveloppe de la conduite.

Selon cette exécution, le moyen d'obturation du dispositif détecteur peut consister en un épaulement annulaire sur lequel repose un flotteur traversé par un trou capillaire et pourvu à sa partie inférieure de moyens d'étanchéité, le dit flotteur étant apte à obturer le tube du dispositif détecteur.

Une variante de cette exécution avantageuse comporte, entre la tête de la sonde et la tubulure de raccordement avec l'enveloppe extérieure de la conduite, un ballon gonflable dont l'embouchure est reliée à une extrémité d'un tuyau flexible, l'autre extrémité de ce tuyau étant reliée à un moyen de fermeture accessible au point d'accès du dispositif. Ce ballon, lorsqu'il est gonflé, est apte à obturer le tube du dispositif détecteur, de façon à permettre un démontage du couvercle du dispositif détecteur sans annuler la dépression régnant dans l'enveloppe de la conduite.

De façon préférée, les dispositifs de branchement pour capteurs de vibrations sont également adaptés au branchement de capteurs de vibrations acoustiques.

Le principe de fonctionnement de l'invention est assez simple.

La sonde détectrice de liquide est constituée de deux électrodes électriquement isolées l'une de l'autre, reliées, via des moyens de connexion internes, à un moyen de transmission de signaux électriques pouvant comporter un circuit amplificateur.

La sonde détectrice telle que décrite ci-dessus est activée lorsqu'un liquide conducteur tel que de l'eau ou de la vapeur condensée vient s'interposer entre les deux électrodes; en l'occurrence, lorsque la cuvette collectrice se remplit de liquide ou lors d'une simulation de fuite. Le circuit, se fermant entre les deux électrodes, produit un signal électrique, éventuellement modulé par un dispositif électronique, qui est transmis à un tableau de contrôle.

Le tableau central comprend avantageusement des moyens de comptage horaire; l'objet de ces dispositifs n'est pas tellement de connaître l'heure exacte d'apparition d'une fuite, mais de pouvoir caractériser la fuite en fonction de la vitesse avec laquelle le fluide se répand au long d'une conduite.

S'il se produit une fuite dans l'enveloppe, l'air ou l'eau fusant au travers de la paroi produit une vibration qui se répercute le long de la conduite. Grâce aux dispositifs de branchement convenablement espacés le long de la conduite, il est aisé de raccorder à tout moment des capteurs de vibration en amont et en aval d'une section où une fuite a été décelée par un dispositif détecteur. Ces capteurs mesurent la vibration propagée le long des tuyaux et localisent avec grande précision l'emplacement de la fuite par recoupement des mesures faites en amont et en aval.

La fuite peut s'être produite dans l'enveloppe protectrice extérieure, ou dans le tube transporteur de fluide lui-même, ce qui donne lieu à un mode opératoire différent. La nature du fluide transporté a également son importance.

Si la fuite affecte l'enveloppe, le vide éventuel de l'espace compris entre le tube transporteur de fluide et l'enveloppe extérieure s'annule peu à peu. Après avoir retiré le couvercle qui couvre l'orifice de raccordement, on lui substitue un capteur qui est à même de déceler toute vibration transmise par l'air introduit dans le volume de l'enveloppe. Le cas échéant, les vibrations acoustiques produites par la fuite sont induites en mettant l'enveloppe protectrice extérieure sous pression.

Lorsque la fuite affecte un tube transporteur de fluide, la mesure doit être effectuée de façon différente suivant le fluide transporté.

S'il s'agit d'un fluide à l'état liquide, tel que par exemple de l'eau pressurisée, le capteur peut être mis simplement en contact avec l'extérieur du tube transporteur pour y mesurer les vibrations permettant de localiser la fuite. Il suffit dans ce cas d'introduire le capteur au travers de l'orifice de la tubulure reliée à l'enveloppe extérieure pour qu'il vienne s'appliquer sur le tube central.

S'il s'agit d'un fluide à l'état gazeux, (tel que de la vapeur), il est nécessaire d'amener le capteur acoustique au contact du fluide gazeux. Dans ce cas, le dispositif de raccordement pour capteur comportera également une tubulure de branchement reliée au tube de transport du fluide.

Le fluide étant sous pression, il est nécessaire d'interposer sur son passage un moyen de fermeture (tel qu'une vanne).

La mesure se fait dans ce cas en fixant le capteur sur l'embase, puis en ouvrant la vanne de façon à mettre le capteur en contact avec le fluide gazeux transporté.

Dans une variante d'exécution, la tubulure de raccordement du capteur relié à l'enveloppe est fermée par une cloche qui coiffe la vanne à passage intégral fermant la tubulure reliée au tube de transport de fluide.

Le montage des dispositifs sur les manchettes de raccordement des conduites est particulièrement économique en main-d'oeuvre puisque la tranchée est de toute façon élargie à l'endroit des manchettes lors de la pose des conduites; il n'y a donc pas de surcroît de travail de terrassement, comme ce serait le cas si les dispositifs étaient placés directement sur une conduite.

Un des avantages de l'invention résulte de la facilité d'entretien et de contrôle des dispositifs détecteurs.

Tous les composants du dispositif détecteur sont accessibles de l'extérieur, ce qui implique non seulement la possibilité de remplacer un élément défectueux, mais encore celle de lui substituer un élément plus moderne, plus performant, voire régi par un autre principe, critère important au regard de la constante évolution de la technique. Il permet la prise d'échantillon voire, après une fuite, la vidange et le rinçage éventuel du dispositif.

D'autres caractéristiques et avantages de l'invention ressortiront de la description donnée, à titre d'exemple non limitatif, de formes de réalisation particulières de l'invention appliquées à un réseau de transport de fluide caloporteur, référence étant faite aux dessins annexés, dans lesquels :

la Fig. 1 est une coupe transversale d'une conduite dotée d'un seul tube transporteur de fluide équipée des dispositifs détecteur et de branchement de capteurs d'un système suivant l'invention;

la Fig. 2 est une coupe d'un dispositif détecteur du système suivant l'invention;

la Fig. 3 est une coupe d'une variante d'exécution du dispositif détecteur du système suivant l'invention;

les Fig. 4 et 5 sont des coupes de deux variantes d'exécution de dispositifs de raccordement de capteur du système suivant l'invention, et

la Fig. 6 est une vue longitudinale, avec interruptions et arrachements d'une conduite équipée du système suivant l'invention.

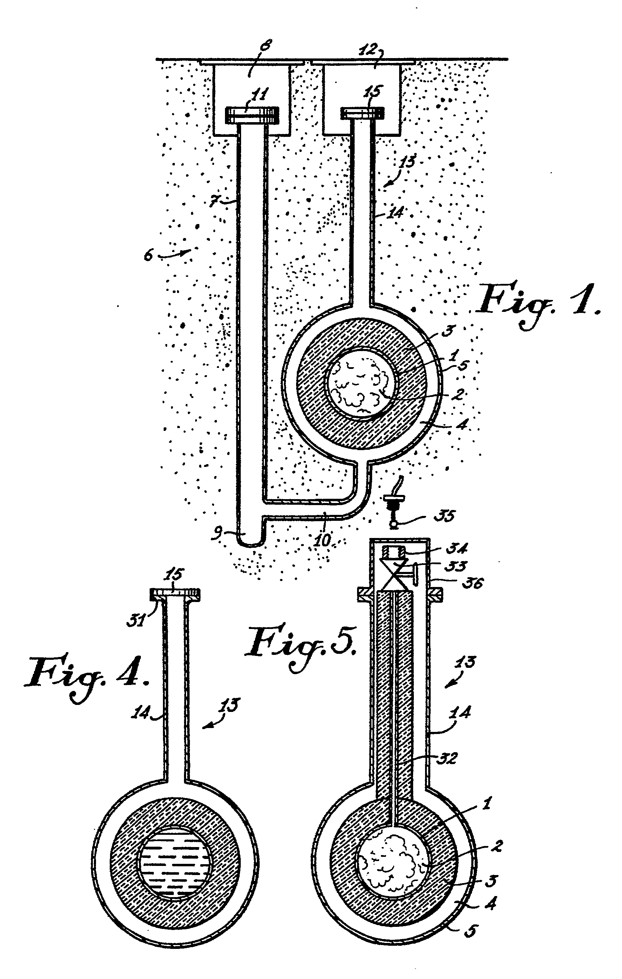

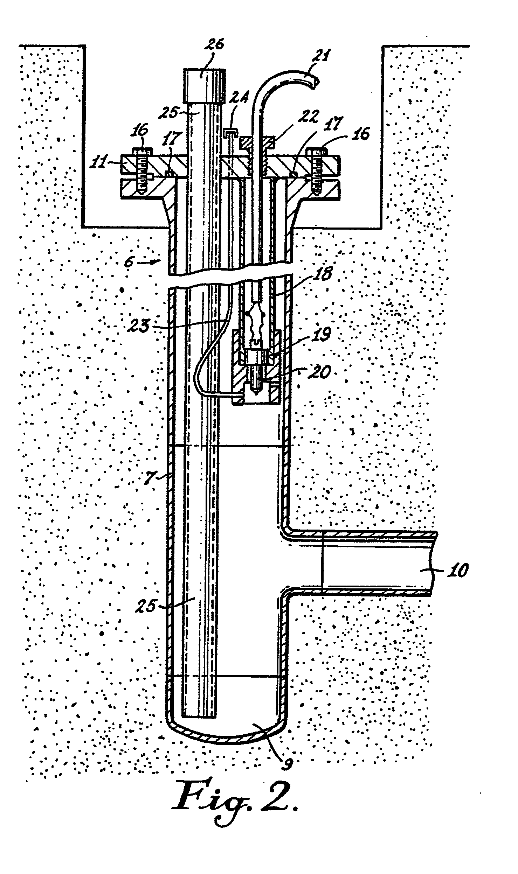

Sur la Fig. 1, le tube intérieur 1 rempli de fluide caloporteur 2 est entouré d'une gaine isolante 3, d'un espace vide 4 et d'une enveloppe protectrice extérieure 5. Le dispositif détecteur 6 comporte une tubulure verticale 7 débouchant dans une trappe d'accès 8. Il est terminé par une cuvette collectrice 9 située en contrebas d'une ligne horizontale passant au-dessous de l'enveloppe 5. Le dispositif détecteur 6 est mis en communication avec l'enveloppe 5 par une tubulure 10 descendant de la partie inférieure de celle-ci vers la cuvette collectrice 9. Le couvercle 11 du dispositif détecteur 6 porte une série d'organes qui ne sont pas montrés à la Fig. 1, mais qui sont montrés en détail à la Fig. 2.

Une seconde trappe 12 permet d'accéder au dispositif de branchement 13 pour capteurs acoustiques constitué ici d'une tubulure 14 reliée à l'enveloppe extérieure 5 et fermée par un couvercle 15.

La Fig. 2 représente un exemple de réalisation du dispositif détecteur 6. Le couvercle 11 est pourvu de moyens de fixation 16 et de moyens d'étanchéité 17; il comporte une canne étanche 18 dont l'extrémité est dotée de moyens de fixation 19 permettant la mise en place d'un élément détecteur de phase liquide (sonde) 20 doté d'éléments d'identification électroniques (non représentés). Des conducteurs électriques 21 propres à acheminer le signal produit par la sonde 20 traversent le couvercle 11 via un moyen d'étanchéité 22.

Dans une forme d'exécution préférée, le dispositif détecteur 6 comporte un tube capillaire de contrôle 23 qui traverse le couvercle 11 et débouche à hauteur de l'élément sensible 20 de la sonde, perpendiculairement à celui-ci.

L'autre extrémité du tube capillaire 23 est normalement coiffée d'un bouchon 24. Lors d'un contrôle de routine, le tube capillaire peut être raccordé, par exemple, à un réservoir d'eau sous pression; on peut de la sorte injecter un faible volume d'eau au niveau de la sonde pour simuler une fuite; il est également possible de sécher ainsi la sonde (par l'injection d'air) et de la nettoyer (en injectant un liquide détergent), ce qui évite tout démontage.

Dans une forme avantageuse du dispositif 6, le couvercle 11 est traversé par un tube d'échantillonnage 25 qui aboutit au fond de la cuvette 9. Le tube d'échantillonnage 25 est fermé à son extrémité supérieure par un bouchon 26.

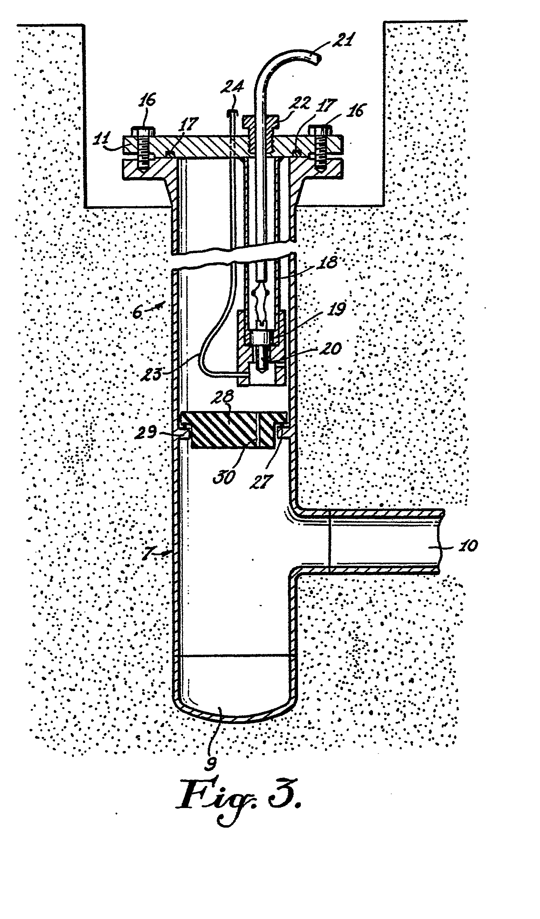

La Fig. 3 représente une autre exécution d'un dispositif détecteur 6 suivant l'invention où le tube 7 comporte un épaulement 27 de forme annulaire sur lequel repose un flotteur 28 muni de moyens d'étanchéité 29 et percé d'un canal capillaire 30.

Lorsque l'on désire retirer le couvercle du dispositif détecteur, par exemple pour remplacer la sonde, le flotteur s'applique contre l'épaulement sous l'effet de la différence de pression et empêche l'afflux d'air dans la conduite, la perte se produisant au travers du canal capillaire étant négligeable.

Lorsque le dispositif est refermé, le canal capillaire équilibre les pressions régnant au-dessus et au-dessous du flotteur, de telle façon qu'il n'adhère pas sur son siège en cas de fuite, empêchant ainsi le liquide d'atteindre la sonde.

Une autre exécution du dispositif détecteur comporte, à l'intérieur de la tubulure, un autre moyen de fermeture pour permettre le démontage de la tête de la sonde.

Il s'agit en l'occurrence d'un ballonnet gonflable relié à l'extérieur via un petit tube flexible fermé, par exemple, par une vanne.

En service normal, ce ballon est dégonflé et recroquevillé sur lui-même. En cas de fuite, il laisse donc passer l'eau vers la sonde.

Lorsque l'on procède à l'entretien, pour remplacer la sonde par exemple, ce système permet d'accéder à l'intérieur du dispositif détecteur sans laisser pénétrer une quantité d'air appréciable à l'intérieur de l'enveloppe protectrice. Il suffit en effet de brancher le ballonnet à un système de gonflage quelconque ou même de le relier à l'atmosphère extérieure. La pression gonfle le ballonnet qui se plaque contre les parois, obturant le passage de l'air vers la conduite.

Un siège prévu dans la partie inférieure du ballon évite qu'il ne s'enfonce sous l'effet de la différence de pression.

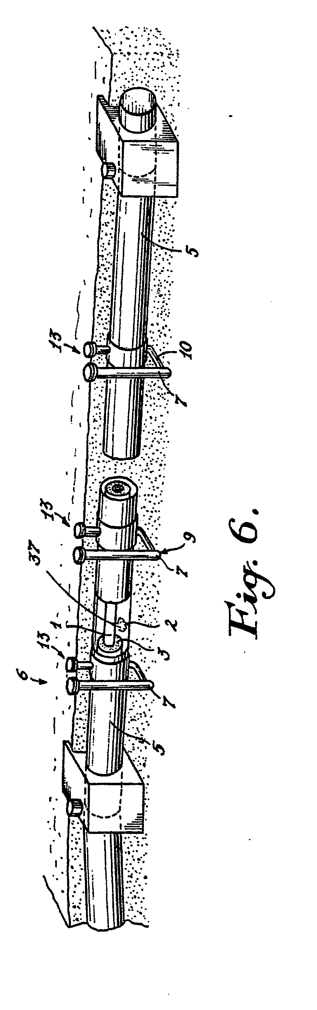

Les Fig. 4 et 5 montrent deux variantes d'exécution du dispositif de branchement de capteurs 13 d'un système de détection et de localisation des fuites suivant l'invention.

La Fig. 4 montre une exécution plus particulièrement prévue pour un réseau de transport de fluide caloporteur à l'état liquide tel que l'eau pressurisée où le tube 14, terminé par des brides 31, est fermé par un couvercle 15.

La Fig. 5 montre une autre exécution plus particulièrement indiquée pour un réseau de transport de fluide caloporteur à l'état gazeux tel que la vapeur.

Le tube 32 relié au volume interne 2 du tube caloporteur 1 est fermé, à sa partie supérieure, par une vanne 33 à passage intégral supportant une embase 34 où un capteur 35 peut être fixé. Le tube 14 est fermé par une cloche amovible 36 qui coiffe la vanne 33.

La Fig. 6 montre schématiquement une vue longitudinale d'une conduite de transport de fluide caloporteur équipée d'un système de détection et de localisation de fuite suivant l'invention. L'ensemble des opérations résultant d'une fuite sera décrit en se référant à cette Fig. 6.

Lorsqu'il se produit une fuite 37, le fluide 2 s'écoule dans l'enveloppe extérieure 5 en suivant la ligne de pente de la conduite. Il atteint l'orifice du premier dispositif détecteur 6 situé en aval, emplit la cuvette 9 et atteint l'élément sensible de la sonde 20. Un signal de défaut est alors transmis via les conducteurs électriques 21 à un tableau central, non représenté. Ce signal électrique active simultanément un moyen de signalisation de défaut, un moyen d'affichage localisant le dispositif ayant détecté la fuite et un moyen de comptage horaire. Le fluide continuant à s'écouler atteint, après un certain temps, le ou les dispositifs détecteurs situés en aval du premier. En conséquence, un deuxième, puis un troisième signal de défaut est émis, le temps écoulé entre chacun de ces signaux permettant de caractériser l'importance de la fuite.

Les dispositifs détecteurs ayant permis de localiser le tronçon de conduite défectueux, on branche une pompe sur le tuyau de prélèvement 25 du premier dispositif 6 à avoir réagi. L'examen du fluide recueilli permet de préciser si la fuite affecte le tuyau intérieur 1 ou l'enveloppe extérieure 5. Suivant le cas, on introduit le capteur d'un appareil de localisation fine (par exemple un appareil de corrélation acoustique) dans le conduit 32 du dispositif de branchement 13 (tel qu'illustré à la Fig. 5), en communication avec le volume interne 2 du tuyau caloporteur 1, ou dans le conduit 14 du dispositif de branchement, en communication avec l'espace 4 interne à l'enveloppe de protection 5.

Pour plus de clarté, les dessins et les descriptions font référence au cas particulier d'une conduite enterrée dotée d'un seul tube de transport de fluide caloporteur; il va de soi que l'invention telle que décrite ci-dessus s'applique de la même façon à des conduites de transport de fluides caloporteurs enterrées ou non comportant plusieurs tubes transporteurs de fluides réunis sous une même enveloppe; dans ce cas, chaque tube transporteur de fluide peut être relié distinctement à un dispositif de raccordement de capteur comme décrit plus haut.

Il est évident par ailleurs que le système suivant l'invention s'applique à tout système de transport de fluide utilisant le principe de la double enveloppe.

**Revendications**

1. Système de détection et de localisation de fuite dans une conduite à double enveloppe constituée d'au moins un tube transporteur de fluide enfermé dans une enveloppe protectrice extérieure comprenant:

des dispositifs détecteurs, échelonnés le long des conduites, chacun de ces dispositifs détecteurs consistant en un tube qui, depuis un point d'accès (8), descend à côté de la conduite;

une sonde (20) apte à émettre un signal électrique de défaut étant positionnée dans ces détecteurs par une canne (18) portée par un couvercle (11) fermant la partie supérieure du dit tube (7);

des moyens de transmission (21) de signaux électriques ou électroniques reliant les sondes (20) des dispositifs détecteurs à un tableau de contrôle, caractérisé en ce que

chaque tube se termine à son extrémité inférieure par une cuvette (9) située en contrebas de la dite conduite;

chaque cuvette étant pourvue d'une sonde détectrice de phase liquide et étant mise en communication avec l'espace compris entre le tube transporteur de fluide (1) et l'enveloppe protectrice extérieure (5) par une tubulure (10) qui, depuis la partie inférieure de cette enveloppe protectrice (15), descend vers la dite cuvette (9);

le dit système comprenant, en outre, des dispositifs de branchement (13) pour capteurs de vibrations (35) échelonnés le long des conduites, ces dispositifs (13) comportant une tubulure (14) dont une des extrémités est branchée sur l'enveloppe protectrice extérieure (5) de la conduite et dont l'autre extrémité, pourvue de moyens de fermeture (15), aboutit à un point d'accès (12) et est terminée par une embase (34) appropriée au montage de capteurs de vibrations (35);

le tableau de contrôle comprenant des moyens de signalisation aptes à avertir le personnel de l'émission d'un signal de défaut, des moyens d'affichage aptes à désigner la sonde (20) ayant réagi; des moyens de comptage horaire aptes à déterminer l'intervalle écoulé depuis l'émission d'un signal de défaut.

2. Système de détection et de localisation de fuite suivant la revendication 1, caractérisé en ce que la conduite est enterrée sur au moins une partie de sa longueur.

3. Système de détection et de localisation de fuite suivant l'une quelconque des revendications 1 et 2, caractérisé en ce que chaque dispositif (13) de branchement pour capteurs devibrations (35) comporte, en outre pour chaque tube transporteur de fluide (1) une tubulure (32) dont une des extrémités est branchée sur un tube transporteur de fluide (1) et dont l'autre extrémité, pourvue de moyens de fermeture (33), aboutit au point d'accès (12) et est terminée par une embase (34) appropriée au montage de capteurs de vibrations (35).

4. Système de détection et de localisation de fuite suivant la revendication 3, caractérisé en ce que chaque tubulure de branchement (32) pour capteur de vibrations (35) reliée, à un tube de transport de fluide, est entourée d'une tubulure de branchement (14) pour capteur de vibrations (35) reliée à l'enveloppe protectrice extérieure (5).

5. Système de détection et de localisation de fuite suivant la revendication 4, caractérisé en ce que chaque tubulure de branchement (32) pour capteur (35) reliée au tube de transport de fluide (1), est fermée par une vanne à passage intégral (33).

6. Système de détection et de localisation de fuite suivant l'une quelconque des revendications précédentes, caractérisé en ce que les dispositifs détecteurs (6) et les dispositifs de branchement (13) de capteurs (35) sont montés sur des manchettes de raccordement des conduites.

7. Système de détection et de localisation de fuite suivant l'une quelconque des revendications précédentes, caractérisé en ce que chaque dispositif détecteur (6) comporte un tube capillaire (23) débouchant au droit de la sonde détectrice (20) de phase liquide, apte à injecter un liquide sur la sonde (20) lors d'opérations d'entretien pour simuler une fuite ou nettoyer la sonde sans démontage.

8. Système de détection et de localisation de fuite suivant l'une quelconque des revendications précédentes, caractérisé en ce que chaque dispositif détecteur (6) est doté d'un tube de prélèvement (25) qui traverse le couvercle (11) et débouche dans la cuvette collectrice (9).

9. Système de détection et de localisation de fuite suivant l'une quelconque des revendications 1 à 7, caractérisé en ce que chaque dispositif détecteur (6) comporte, entre la tête de la sonde (20) et la tubulure (10) de raccordement avec l'enveloppe extérieure (5) de la conduite, un moyen apte à obturer le tube (7) du dispositif détecteur, de façon à permettre un démontage du couvercle (11) du dispositif détecteur (6) sans annuler la dépression régnant dans l'enveloppe (5) de la conduite.

10. Système de détection et de localisation de fuite suivant la revendication 9, caractérisé en ce que le moyen d'obturation du dispositif détecteur consiste en un épaulement annulaire (27) sur lequel repose un flotteur (28) traversé par un trou capillaire (30) et pourvu à sa partie inférieure de moyens d'étanchéité (29), le dit flotteur (28) étant apte à obturer le tube (7) du dispositif détecteur (6).

11. Système de détection et de localisation de fuite suivant la revendication 9, caractérisé en ce que chaque dispositif détecteur (6) comporte, entre la tête de la sonde (20) et la tubulure (10) de raccordement avec l'enveloppe extérieure (5) de la conduite, un ballon gonflable dont l'embouchure est reliée à une extrémité d'un tuyau flexible, l'autre extrémité de ce tuyau étant reliée à un moyen de fermeture accessible au point d'accès (8) du dispositif, le dit ballon, lorsqu'il est gonflé, étant apte à obturer le tube (7) du dispositif détecteur (6) de façon à permettre un démontage du couvercle (11) du dispositif détecteur (6) sans annuler la dépression régnant dans l'enveloppe (5) de la conduite.

12. Système de détection et de localisation des fuites suivant l'une quelconque des revendications précédentes, caractérisé en ce que les dispositifs de branchements (13) pour capteurs de vibrations (35) sont adaptés au branchement de capteurs de vibrations acoustiques (35).

## Claims

1. System for detection and localization of leakage in a double-walled conduit consisting of at least one fluid-conveying tube, enclosed in an exterior protective wall, comprising:

detector devices, arranged at intervals along the conduits, each of these detector devices consisting of a tube which, from an access point (8), descends alongside the conduit;

a probe (20) capable of emitting an electrical fault-signal being positioned in these detectors by a rod (18) carried by a cover (11) closing the upper portion of the said tube (7);

means (21) for transmitting electrical or electronic signals connecting the probes (20) of the detector devices to a control console, characterized in that each tube is terminated at its lower end by a dish (9) situated below the said conduit;

each dish being provided with a liquid-phase detecting probe and being placed in communication with the space contained between the fluid-conveying tube (1) and the exterior protective wall (5) by a tubing (10) which, from the lower portion of this protective wall (5), descends towards the said dish (9);

the said system further comprising, branch devices (13) for vibration sensors (35) arranged at intervals along the conduits, these devices (13) comprising a tubing (14), one end of which is branched to the exterior protective wall (5) of the conduit and the other end of which, provided with closing means (15), terminates at an access point (12) and ends in a seating (34) suitable for mounting vibration sensors (35);

the control console comprising signalling means capable of advising the personnel of the emission of a fault-signal, display means capable of indicating the probe (20) having responded; time recording means capable of determining the interval elapsed since the emission of a fault-signal.

2. System for detection and localization of leakage according to Claim 1, characterized in that the conduit is buried over at least a portion of its length.

3. System for detection and localization of leakage according to either of Claims 1 and 2, characterized in that each branch device (13) for vibration sensors (35) further comprises, for each fluid-conveying tube (1), tubing (32), one end of which is branched to a fluid-conveying tube (1) and the other end of which, provided with closing means (33), terminates at the access point (12) and ends in a seating (34) suitable for mounting vibration sensors (35).

4. System for detection and localization of leakage according to Claim 3, characterized in that each vibration sensor (35) branch tubing (32), connected to a fluid-conveying tube, is surrounded by a vibration sensor (35) branch tubing (14) connected to the exterior protective wall (5).

5. System for detection and localization of leakage according to Claim 4, characterized in that each sensor (35) branch tubing (32) connected to the fluid-conveying tube (1) is closed by a full bore valve (33).

6. System for detection and localization of leakage according to any one of the preceding claims, characterized in that the detector devices (6) and the sensor (35) branch devices (13) are mounted on conduit connecting collars.

7. System for detection and localization of leakage according to any one of the preceding claims, characterized in that each detector device (6) comprises a capillary tube (23) opening opposite the liquid-phase-detecting probe (20), capable of injecting a liquid on to the probe (20) during maintenance operations in order to simulate a leakage or to clean the probe without demounting.

8. System for detection and localization of leakage according to any one of the preceding claims, characterized in that each detector device (6) is equipped with a sampling tube (25) which passes through the cover (11) and opens into the collecting dish (9).

9. System for detection and localization of leakage according to any one of Claims 1 to 7, characterized in that each detector device (6) comprises, between the head of the probe (20) and the tubing (10) linking with the exterior wall (5) of the conduit, a means capable of blocking off the tube (7) of the detector device, so as to permit demounting of the cover (11) of the detector device (6) without releasing the partial vacuum existing inside the conduit wall (5).

10. System for detection and localization of leakage according to Claim 9, characterized in that the means of blocking the detector device consists of an annular shoulder (27) on which a float (28) rests, through which a capillary hole (30) passes and which is provided at its lower portion with sealing means (29), the said float (28) being capable of blocking off the tube (7) of the detector device (6).

11. System for detection and localization of leakage according to Claim 9, characterized in that each detector device (6) comprises, between the head of the probe (20) and the tubing (10) linking with the exterior wall (5) of the conduit, an inflatable balloon whose mouthpiece is connected to one end of a flexible pipe, the other end of this pipe being connected to a closing means accessible at the access point (8) of the device, the said balloon, when it is inflated, being capable of blocking off the tube (7) of the detector device (6) so as to permit demounting of the cover (11) of the detector device (6) without releasing the partial vacuum existing inside the wall (5) of the conduit.

12. System for detection and localization of leakage according to any one of the preceding claims, characterized in that the vibration sensor (35) branch devices (13) are adapted for branching to acoustic vibration sensors (35).

## Patentansprüche

1. System zur Leckerkennung und Leckortung in einer doppelwandigen Rohrleitung bestehend aus zumindest einem Flüssigkeit transportierenden Rohr, das in einer Außenschutzhülle eingeschlossen ist, mit

entlang den Rohrleitungen gestaffelte Detektoreinrichtungen, die jeweils aus einem Rohr bestehen, das von einer Zugangstelle (8) entlang des Rohres hinabführt;

einer Sonde (20) zum Senden eines elektrischen Fehlersignals, die in diesen Detektoren durch ein Schutzrohr (18) angeordnet wird, das an einem Deckel (11) befestigt ist, der den oberen Teil des Rohres (7) abschließt;

einer elektrischen oder elektronischen Signalübertragungseinrichtung (21), die die Sonden (20) der Detektoreinrichtungen mit einer Kontrolltafel verbindet, dadurch gekennzeichnet, daß

jedes Rohr an seinem unteren Ende mit einem Auffangbecken (9) abschließt, das unterhalb der Rohrleitung angebracht ist;

jedes Auffangbecken mit einer Flüssigphasen-Detektorsonde versehen ist und mit dem Zwischenraum zwischen dem Flüssigkeit transportierenden Rohr (1) und der Außenschutzhülle (5) über einen Rohransatz (10) in Verbindung steht, der sich vom unteren Teil dieser Schutzhülle (5) zu den Auffangbecken (9) nach unten erstreckt,

das System ferner, entlang den Rohrleitungen gestaffelte Anschlußeinrichtungen (13) für Erschütterungsfühler (35) aufweist, wobei diese Anschlußeinrichtungen (13) mit einem Rohransatz (14) versehen sind, dessen eines Ende auf der Außenschutzhülle (5) der Rohrleitung angeschlossen ist und dessen anderes Ende mit einer Schließeinrichtung (15) versehen ist, der auf eine Zugangsstelle (12) trifft und mit einem Ansatz (34) zum Einbau von Erschütterungsfühlern (35) endet; und daß

die Kontrolltafel eine Signaleinrichtung, um das Personal auf die Abgabe eines Fehlersignals aufmerksam zu machen, eine Anzeigeeinrichtung zum Anzeigen der Sonde (20) die reagiert hat, und einen Stundenzähler aufweist, um den Zeitabstand zu bestimmen, der seit dem Senden eines Fehlersignals verstrichen ist.

2. System zur Leckerkennung und Leckortung nach Anspruch 1, dadurch gekennzeichnet, daß zumindest ein Teil der Rohrleitung unterirdisch ist.

3. System zur Leckerkennung und Leckortung nach Anspruch 1 oder 2, dadurch gekennzeichnet, daß jede Anschlußeinrichtung (13) für Erschütterungsfühler (35) für jedes Flüssigkeit transportierende Rohr (1) einen Rohransatz (32) aufweist, dessen eines Ende an einem Flüssigkeit transportierenden Rohr (1) angeschlossen ist und dessen mit einer Schließeinrichtung (33) versehenes anderes Ende an der Zugangsstelle (12) liegt und mit einem Ansatz (34), der dem Einrichten von Erschütterungsfühlern (35) dient, endet.

4. System zur Leckerkennung und Leckortung nach Anspruch 3, dadurch gekennzeichnet, daß jeder Anschlußrohransatz (32) für Erschütterungsfühler (35), der mit einem Flüssigkeit transportierenden Rohr verbunden ist, von einem Anschlußrohransatz (14) für Erschütterungsfühler (35) umhüllt ist, der mit der Außenschutzhülle (5) verbunden ist.

5. System zur Leckerkennung und Leckortung nach Anspruch 4, dadurch gekennzeichnet, daß jeder Anschlußrohransatz (32) für Erschütterungsfühler (35), der mit dem Flüssigkeit transportierenden Rohr (1) verbunden ist, durch ein integriertes Durchlaßventil (33) verschließbar ist.

6. System zur Leckerkennung und Leckortung nach einem der vorstehenden Ansprüche, dadurch gekennzeichnet, daß die Detektoreinrichtungen (6) und die Anschlußeinrichtungen (13) der Fühler (35) auf Rohrverbindungsmanschetten angebracht sind.

7. System zur Leckerkennung und Leckortung nach einem der vorstehenden Ansprüche, dadurch gekennzeichnet, daß jede Detektoreinrichtung (6) ein Kapillarrohr (23) aufweist, das senkrecht auf die Flüssigphase-Detektorsonde (20) trifft und zum Spritzen von Flüssigkeit auf die Sonde (20) während Reinigungsvorgängen vorgesehen ist, um ein Leck zu simulieren oder die Sonde ohne Auseinanderbauen zu reinigen.

8. System zur Leckerkennung und Leckortung nach einem der vorstehenden Ansprüche, dadurch gekennzeichnet, daß jede Detektoreinrichtung (6) mit einem Entnahmerohr (25) versehen ist, das durch den Deckel (11) verläuft und in das Auffangbecken (9) mündet.

9. System zur Leckerkennung und Leckortung nach einem der Ansprüche 1 bis 7, dadurch gekennzeichnet, daß jede Detektoreinrichtung (6) zwischen dem Sondenkopf (20) und dem Verbindungsrohransatz (10) mit der Außenhülle (5) der Rohrleitung eine Einrichtung zum Schließen des Rohrs (7) der Detektoreinrichtung aufweist, um das Abmontieren des Deckels (11) der Detektoreinrichtung (6) zu ermöglichen, ohne den Unterdruck, der in der Hülle (5) der Rohrleitung herrscht, zu beseitigen.

10. System zur Leckerkennung und Leckortung nach Anspruch 9, dadurch gekennzeichnet, daß die Schließeinrichtung der Detektoreinrichtung aus einer Ringschulter (27) besteht, auf der ein Schwimmer (28) ruht, durch den eine Kapillarbohrung (30) führt und mit einer Dichtung (29) an seinem unteren Teil versehen ist, so daß der Schwimmer (28) das Rohr (7) der Detektoreinrichtung (6) abschließt.

11. System zur Leckerkennung und Leckortung nach Anspruch 9, dadurch gekennzeichnet, daß jede Detektoreinrichtung (6) zwischen dem Sondenkopf (20) und dem Verbindungsrohransatz (10) mit der Rohrleitung-Außenhülle (5) einen aufblasbaren Ballon aufweist, dessen Mundstück mit einem Ende eines biegsamen Schlauches verbunden ist, und das andere Ende dieses Schlauches mit einem Verschluß, der an der Zugangsstelle (8) der Vorrichtung zugänglich ist, verbunden ist, wobei dieser Ballon, wenn er aufgeblasen ist, das Rohr (7) der Detektoreinrichtung (6) verschließt, so daß der Deckel (11) der Detektoreinrichtung (6) abmontiert werden kann, ohne den Unterdruck, der in der Hülle (5) der Rohrleitung herrscht, zu beseitigen.

12. System zur Leckerkennung und Leckortung nach einem der vorstehenden Ansprüche, dadurch gekennzeichnet, daß die Anschlußeinrichtungen (13) der Erschütterungsfühler (35) an den Anschluß der akustischen Erschütterungsfühler (35) angepaßt sind.

Fig. 1.

Fig. 4.

Fig. 5.

Fig. 2.

Fig. 3.

Fig. 6.